# DEMANDE DE BREVET EUROPEEN

(11) **EP 4 293 964 A1**
(43) Date de publication de la demande: **20.12.2023**
(21) Numéro de dépôt: 23176258.4
(22) Date de dépôt: 31.05.2023
(51) Int. Cl.: H04L 9/40, H04L 9/32, H04W 4/40, H04W 12/108, H04W 12/61, H04L 67/12, G06F 21/74

(54) **PROCÉDÉ DE GESTION DE COMMUNICATIONS DE SYSTÈME DE TRANSPORT INTELLIGENT ET UNITÉ DE COMMANDE ÉLECTRONIQUE CORRESPONDANTE**

(30) Priorité: 13.06.2022 FR 2205652
(71) Demandeur: STMicroelectronics (Rousset) SAS, 13790 Rousset (FR)
(72) Inventeur: TABARIES, Laurent, 13400 AUBAGNE (FR)
(74) Mandataire: Casalonga

(57) **Abrégé**

L'unité de commande électronique (ECU) comprend un circuit de communication (MDM) adapté pour recevoir des messages (INC_MSS) du type système de transport intelligent (ITS), un circuit d'authentification (HSM) adapté pour authentifier les messages reçus, et un élément sécurisé (eSE) comportant une mémoire non-volatile matériellement sécurisée (sNVM) et un compteur d'horloge toujours actif (RTC), l'élément sécurisé (eSE) étant configuré pour attribuer aux messages reçus et authentifiés une donnée d'horodatage (TS) issue dudit compteur d'horloge, et pour enregistrer lesdits messages reçus authentifiés (ATH_DAT) et les données d'horodatages respectives dans la mémoire non-volatile matériellement sécurisée (sNVM).

## Description

Des modes de réalisation et de mise en oeuvre concernent les unités de commande électroniques « ECU » (acronymes des termes anglais usuels « Electronic Control Unit »), typiquement destinées à l'équipement électronique automobile, adaptées pour communiquer dans un système du type système de transport intelligent.

Le système de transport intelligent (usuellement désigné par l'acronyme « ITS » des termes anglais « Intelligent Transport System ») est la dénomination des technologies électroniques et informatiques prévu pour gérer numériquement le domaine des transports routiers et de la logistique, notamment pour des automobiles personnelles.

Le système de transport intelligent ITS est prévu pour la régulation du trafic automobile, en gérant les échanges de messages communiqués entre les voitures « C2X » (pour « Car to everything » en anglais) encore appelé « V2X » (pour « Vehicule to everything ») et d'autres voitures ou des infrastructures (feux de signalisation, ronds-points, etc.). Les messages C2X sont notamment des messages de sécurité de base « BSM » (acronyme des termes anglais « Basic Safety Message ») communiquant des alertes météo, les alertes de voitures arrêtées ou d'accidents, des alertes de dysfonctionnement de signalétique, etc.

Les messages C2X sont reçus à la volée, analysés et stockés dans une mémoire non-volatile typiquement d'usage générale, usuellement une mémoire « Flash », de l'unité de commande électronique. En outre, pour se prémunir contre le risque de corruption des données stockées dans la mémoire, par exemple contre un « piratage » de la mémoire pour accéder à des informations ou des clés sensibles ou secrètes, il est prévu que les messages C2X aient une durée de vie très courte, et que leurs envois soient renouvelés très fréquemment.

Ainsi, dans le système de transport intelligent ITS, il existe un objectif de traitement en réception d'un millier (1000) de messages reçus par secondes. Les unités de commande électroniques actuelles adaptées aux communications ITS ne sont pas capables d'atteindre cet objectif de traitement en réception.

En effet, pour assurer la confiance des communications du type ITS, une signature numérique de l'émetteur est typiquement prévue dans les messages C2X. La signature numérique utilise classiquement des infrastructures à clés publiques « PKI » (acronyme des termes anglais usuels « Public Key Infrastructure ») et des algorithmes de signature du type « DSA_256 » ou « ECDSA_256 » (acronymes des termes anglais « Digital Signature Algorithm » et respectivement « Elliptic Curve DSA » désignant des techniques bien connues de l'homme de l'art). Ainsi, pour chaque message entrant, une vérification cryptographique de la signature ECDSA_256 est exécutée afin d'authentifier le message reçu avant son stockage en mémoire.

Les procédures d'authentification, notamment du type ECDSA_256, demandent typiquement une grande quantité de ressources de calcul et sont relativement longues à mettre en oeuvre.

En conséquence, lorsque l'unité de commande électronique reçoit trop de messages, un phénomène de « goulot d'étranglement » dans le traitement des messages reçus peut se produire, ce qui abaisse la bande passante en réception bien en dessous de l'objectif susmentionné.

Le problème devrait s'aggraver au fur et à mesure que les voitures et les infrastructures seront équipées pour le système de transport intelligent ITS, et que de plus en plus de messages sont communiqués.

Les propositions classiques de solutions à ce problème sont d'augmenter la capacité de traitement des unités de commande électroniques. Cela étant, l'augmentation de la capacité de traitement augmente également la consommation d'énergie, la taille et le prix des circuits intégrés des unités de commande électroniques destinées à l'automobile.

Ainsi, il existe un besoin d'éviter de devoir utiliser des circuits intégrés plus performants (et donc plus grands, plus chers et plus énergivores), pour répondre à la demande élevée de bande passante, tout en bénéficiant d'une sécurité et d'une confiance meilleures.

Selon un aspect, il est proposé à cet égard une unité de commande électronique comprenant un circuit de communication adapté pour recevoir des messages du type de système de transport intelligent, un circuit d'authentification adapté pour authentifier les messages reçus, et un élément sécurisé comportant une mémoire non-volatile matériellement sécurisée et un compteur d'horloge toujours actif, l'élément sécurisé étant configuré pour attribuer aux messages reçus et authentifiés une donnée d'horodatage issue dudit compteur d'horloge, et pour enregistrer lesdits messages reçus authentifiés et les données d'horodatages respectives dans la mémoire non-volatile matériellement sécurisée.

En particulier, l'élément sécurisé, ainsi que la mémoire non-volatile, peuvent avantageusement comporter des moyens de protections matérielles adaptés pour une certification au minimum « EAL4+ » ou supérieure (par exemple « EAL5+ », voire « EAL6+ »).

Le fait de stocker les messages authentifiés dans la mémoire non-volatile matériellement sécurisée permet d'augmenter la durée de vie des messages stockés, et ainsi éviter d'autant le nombre de traitements des messages de renouvellements systématiques. La valeur d'horodatage permet une gestion de la durée de vie, plus longue, des messages de manière sécurisée et parfaitement fiable.

En effet, dans un exemple de scénario le plus défavorable, on peut évaluer une durée de vie, c'est-à-dire une durée de confiance avant renouvellement de l'authentification, sept fois plus longue dans la mémoire non-volatile matériellement sécurisée que dans une mémoire non-volatile d'usage général. Or, même dans ce pire cas, les traitements des messages de renouvellements sont réduits d'autant que la durée de vie est augmentée, c'est-à-dire que le nombre d'authentification des messages reçus est divisé par sept. En pratique, le gain peut être grandement supérieur à sept.

Selon un mode de réalisation, le compteur d'horloge toujours actif est configuré pour générer une valeur courante de base de temps de référence, dans un mode de fonctionnement en veille, (ou basse consommation) et dans un mode de fonctionnement actif de l'élément sécurisé.

Cela permet avantageusement que la donnée d'horodatage soit très fiable, étant donné qu'elle bénéficie des moyens de sécurité de l'élément sécurisé. En particulier, le mécanisme mis en oeuvre par l'unité de commande électronique ne peut pas être compromis par une action faite sur un dispositif externe, potentiellement non-sécurisé, générant la base de temps.

Selon un mode de réalisation, l'unité de traitement électronique comporte un moyen de gestion des messages reçus configuré pour attribuer une durée de vie aux messages enregistrés dans la mémoire non-volatile matériellement sécurisée, et pour rejeter directement un message reçu renouvelant un message antérieurement reçu, authentifié et enregistré dans la mémoire non-volatile matériellement sécurisée et dont la durée de vie n'est pas épuisée.

Il est en effet possible d'identifier qu'un message reçu de renouvellement est déjà enregistré dans la mémoire non-volatile, sans traiter le message de renouvellement par le circuit d'authentification. Ainsi, la procédure de rejet d'un message reçu est très rapide et permet de ne pas engorger le système en cas de grand nombre de messages reçus.

Selon un mode de réalisation, le circuit de communication est adapté à des communications sans fil selon le protocole WiFi 802.11.p (appelé aussi « G5 ») ou selon le protocole 5G.

Selon un mode de réalisation, l'élément sécurisé comporte en outre une première liste d'émetteurs exclus d'office et l'unité de commande électronique est configurée pour rejeter directement un message reçu provenant d'un émetteur de la première liste, sans procéder à l'authentification de ce message par le circuit d'authentification ; et, en alternative ou en combinaison, l'élément sécurisé comporte en outre une deuxième liste d'émetteurs admis d'office et l'unité de commande électronique est configurée pour enregistrer directement un message reçu provenant d'un émetteur de la deuxième liste dans la mémoire non-volatile matériellement sécurisée ou dans une mémoire non-volatile non-sécurisée, sans procéder à l'authentification de ce message par le circuit d'authentification.

Ce mode de réalisation présente notamment l'avantage d'offrir un fonctionnement très rapide (de rejet d'un message sans traitement, ou de l'enregistrement du message sans traitement) et permet de ne pas engorger le système en cas de grand nombre de messages reçus, y compris des messages de renouvellement à une fréquence élevée. En outre, le risque d'extraction ou de modification des données de la première liste et de la deuxième liste est extrêmement faible, étant donné qu'elles bénéficient de la sécurité de l'élément sécurisé, de sorte que les rejets directs ou enregistrements directs des messages restent fiables malgré l'absence d'authentification.

Par ailleurs, en ce qui concerne de mode de réalisation, l'homme du métier pourra, à toutes fins utiles, se référer à la demande de brevet français ayant pour titre « Unité de commande électronique adaptée à des communications de système de transport intelligent et procédé correspondant » déposée le même jour et par le même demandeur que la présente demande.

Selon un autre aspect, il est proposé un procédé de gestion de communications du type système de transport intelligent comprenant une réception d'un message, une authentification du message reçu, une attribution aux messages reçus et authentifiés d'une donnée d'horodatage issue d'un compteur d'horloge toujours actif appartenant à un élément sécurisé d'une unité de commande électronique, et un enregistrement desdits messages reçus authentifiés et des données d'horodatages respectives dans une mémoire non-volatile matériellement sécurisée appartenant à l'élément sécurisé.

Selon un mode de mise en oeuvre, une valeur courante de base de temps de référence est générée par le compteur d'horloge toujours actif, dans un mode de fonctionnement en veille et dans un mode de fonctionnement actif de l'unité de commande électronique.

Selon un mode de mise en oeuvre, le procédé comprend une attribution d'une durée de vie aux messages enregistrés dans la mémoire non-volatile matériellement sécurisée, et un rejet direct d'un message reçu renouvelant un message antérieurement reçu, authentifié et enregistré dans la mémoire non-volatile matériellement sécurisée et dont la durée de vie n'est pas épuisée.

Selon un mode de mise en oeuvre, les communications sont des communications sans fil selon le protocole WiFi 802.11.p (ou « G5 ») ou selon le protocole 5G.

Selon un mode de mise en oeuvre, un message reçu est directement rejeté, sans avoir procédé à ladite authentification de ce message, s'il provient d'un émetteur d'une première liste d'émetteurs exclus d'office contenue dans l'élément sécurisée ; et, en alternative ou en combinaison, un message reçu est directement enregistré dans la mémoire non-volatile matériellement sécurisée ou dans une mémoire non-volatile non-sécurisée, sans avoir procédé à ladite authentification de ce message, s'il provient d'un émetteur d'une deuxième liste d'émetteurs admis d'office contenue dans l'élément sécurisée.

D'autres avantages et caractéristiques de l'invention apparaîtront à l'examen de la description détaillée de modes de réalisation et de mise en oeuvre, nullement limitatifs, et des dessins annexés, sur lesquels :
[Fig 1] ;
[Fig 2] ;
[Fig 3] ;

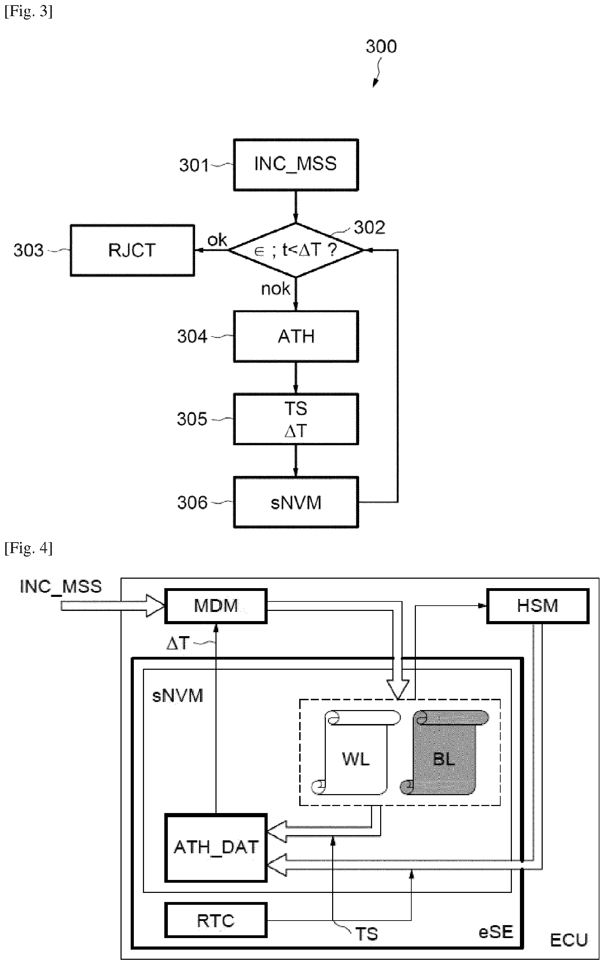

[Fig 4] illustrent des modes de réalisation et de mise en oeuvre de l'invention.

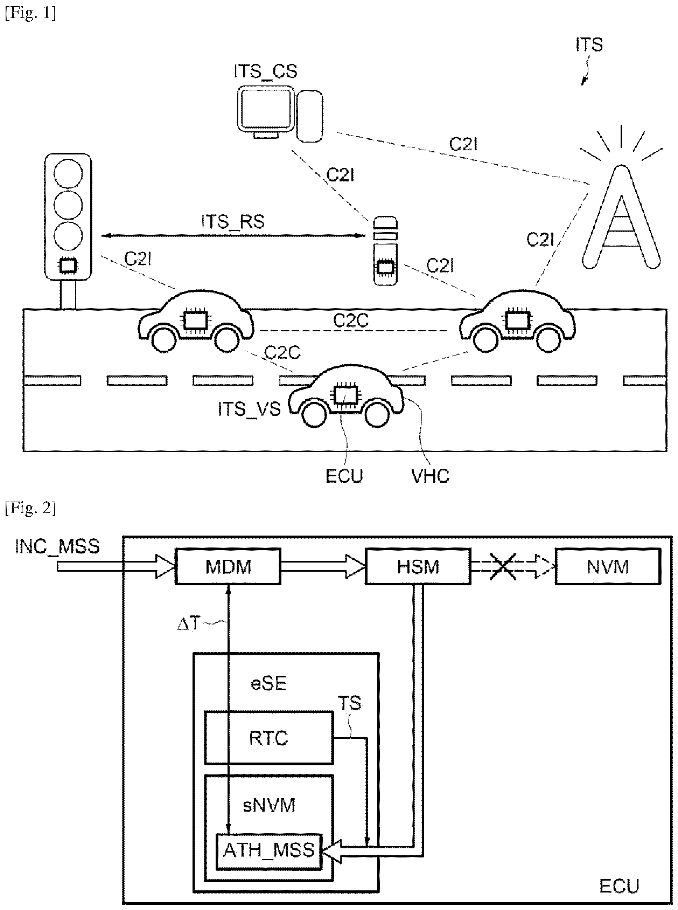

La figure 1 illustre un exemple de système de transport intelligent ITS.

Le système de transport intelligent ITS comporte un réseau de stations de véhicules ITS_VS, de stations d'infrastructure de chaussée ITS_RS, et d'au moins une station centrale ITS_CS. Les véhicules VHC, tels que des automobiles, des poids-lourds, des deux-roues, etc, sont des stations ITS_VS dans le système ITS et peuvent communiquer avec les stations de véhicules ITS_VS avoisinante par des messages C2C (tiré des termes anglais « car to car »). Les stations de véhicules ITS_VS peuvent également communiquer avec les stations d'infrastructures de chaussée ITS-RS avoisinantes, telles que des éléments de signalisation routière (feux tricolore, bornes kilométriques, etc) par des messages C2I (tiré des termes anglais « car to infrastructure »), et aussi avec la station centrale ITS_CS par des messages C2I via un réseau de télécommunication ou via les stations d'infrastructure de chaussée ITS_RS. Les messages généraux C2I, C2C sont aussi désignés par l'abréviation C2X (tiré des termes anglais « car to everything »).

Les messages C2X sont notamment des messages de sécurité de base « BSM » (acronyme des termes anglais « Basic Safety Message ») communiquant des alertes météo, les alertes de voitures arrêtées ou d'accidents, des alertes de dysfonctionnement de signalétique, etc. Les messages C2X sont communiquées par un protocole de communication sans fil, en particulier le protocole de la norme IEEE 802.11p traitant des accès sans fil dans les environnements de véhicules « WAVE » (pour « Wireless Access to Vehicular Environment » en anglais) également désigné « G5 » ou « ITS-G5 ». Les messages C2X peuvent aussi être communiquées par le protocole « 5G » par exemple tel que défini dans la norme de l'institut européen des normes de télécommunications « ETSI F5G » (pour « European Telecommunications Standards Institute » en anglais).

Les différentes stations du système de transport intelligent ITS, en particulier les stations du type « objet connecté » ITS_RS, ITS_VS (c'est-à-dire les stations autres que la station centrale ITS_CS), comportent des unités de commande électroniques ECU (usuellement en anglais « Electronic Control Unit »), typiquement destinées à l'équipement électronique automobile, adaptées pour mettre en oeuvre les communication C2X (C2C, C2I) dans le système de transport intelligent ITS.

On se réfère à cet égard à la figure 2.

La figure 2 illustre une unité de commande électronique ECU tel que mentionnée en relation avec la figure 1.

L'unité de commande électronique ECU peut appartenir à un véhicule terrestre à moteur VHC tel qu'une automobile, un poids-lourd, un deux-roues, ou à un dispositif d'infrastructure de chaussé tel qu'un feu tricolore, une borne kilométrique, un panneau de signalisation, un panneau d'information ou de publicité, une borne d'appel d'urgence, ou autres.

L'unité de commande électronique ECU comprend un circuit de communication MDM, typiquement un « modem », adapté à des communications sans fil selon le protocole de la norme IEEE 802.11p, ou selon le protocole 5G, tels que mentionnés ci-avant. En particulier, le circuit de communication MDM est apte à recevoir des messages INC_MSS (C2X) en provenance du système de transport intelligent ITS.

L'unité de commande électronique ECU comprend un circuit d'authentification HSM adapté pour authentifier les messages reçus INC_MSS. Par exemple, le circuit d'authentification HSM est capable de déchiffrer une signature numérique de l'émetteur du message INC_MSS. La signature numérique est typiquement encodée dans le message INC_MSS par un algorithme de signature à 256 bits du type « DSA_256 » ou « ECDSA_256 » (acronymes des termes anglais « Digital Signature Algorithm » et respectivement « Elliptic Curve DSA »). Ainsi, pour chaque message entrant, une vérification cryptographique de la signature ECDSA_256 est exécutée par le circuit d'authentification HSM.

L'unité de commande électronique ECU comprend typiquement une mémoire non-volatile NVM d'usage général, telle qu'une mémoire Flash. Classiquement, les messages reçus INC_MSS sont enregistrés dans la mémoire d'usage général NVM, après avoir été authentifiés. Cela étant, pour limiter le risque d'extraction des données de la mémoire NVM, dans le cas classique les messages enregistrés ont une durée de vie très courte, et doivent être renouvelées régulièrement, avec la vérification cryptographique de la signature à chaque renouvellement. Cette mise en oeuvre classique n'est pas avantageuse, notamment en matière de consommation énergétique et d'utilisation des ressources calculatoire du circuit d'authentification HSM.

Or, l'unité de commande électronique ECU comprend un élément sécurisé eSE comportant une mémoire non-volatile matériellement sécurisée sNVM et un compteur d'horloge toujours actif RTC. L'élément sécurisé eSE est avantageusement configuré pour attribuer aux messages reçus et authentifiés par le circuit d'authentification HSM, une donnée d'horodatage TS issue dudit compteur d'horloge RTC, et pour enregistrer lesdits messages reçus et authentifiés ATH_MSS et les données d'horodatages respectives TS dans la mémoire non-volatile matériellement sécurisée sNVM.

Par exemple, l'élément sécurisé eSE est « sécurisé » en ce qu'il comporte des protections matérielles telles que des moyens de bouclier actif, de surveillance des paramètres environnementaux, de protection contre les injections de fautes, de protection contre les attaques par canal latéral, ou d'autres moyens. De manière plus générale, l'élément sécurisé eSE comporte des protections matérielles aptes à obtenir une certification de critères communs « EAL4+ » ou « EAL5+ » (acronyme des termes « Evaluation Assurance Level 4+/5+ ») c'est-à-dire une assurance d'évaluation de niveau 4 ou 5 selon des critères communs, typiquement définis dans les normes ISO-15408. La certification peut être obtenue par exemple en satisfaisant à une analyse méthodique avancée des vulnérabilités de classe 5 « AVA_VAN5 » (pour « Vulnerability Assessment » et « Vulnerability Analysis ») desdits critère communs.

Ainsi, l'élément sécurisé eSE, ainsi que la mémoire non-volatile sNVM et le compteur d'horloge toujours actif RTC qu'il incorpore, sont sensiblement « inviolables » (c'est-à-dire inviolables dans la mesure de la certification), et le risque d'extraction des données enregistrées dans la mémoire non-volatile matériellement sécurisée sNVM est beaucoup plus faible que dans les mémoires d'usage général typiques NVM. En conséquence, la durée de vie des messages reçus et authentifiés ATH_MSS est beaucoup plus longue dans la mémoire matériellement sécurisé sNVM que dans une mémoire d'usage général NVM ; et donc la fréquence de renouvellement des messages est beaucoup plus faible.

Par exemple, le scénario le plus défavorable pour la mémoire matériellement sécurisée certifié EAL5+ permet d'augmenter la durée de vie du message ATH_MSS d'un facteur sept par rapport à une mémoire d'usage générale NVM. Cela engendre sept fois moins de mise en oeuvre de la vérification cryptographique de la signature par le circuit d'authentification HSM. Dans des scénarios moins défavorables, la durée de vie du message ATH_MSS peut être augmentée d'un facteur compté sur plusieurs centaines (par exemple un facteur compris entre 100 « cent » et 1000 « mille »).

A cet égard, l'unité de commande électronique peut comporter un moyen de gestion des messages reçus, par exemple inclus dans une fonctionnalité du circuit de communication MDM, ou dans une fonctionnalité de l'élément sécurisé eSE, ou encore dans une fonctionnalité d'une unité de commande apte à exécuter des mises en oeuvre logicielles (non représentée). Le moyen de gestion des messages reçus est configuré pour attribuer une durée de vie ΔT aux messages enregistrés dans la mémoire non-volatile matériellement sécurisée sNVM, par exemple en fonction du niveau de sécurité matérielle de la mémoire non-volatile sécurisé sNVM et en fonction de la nature du message (en effet, un message de communication commercial pourra être considéré moins critique et avoir une durée de vie plus longue qu'un message d'alerte de danger ou un message commandant une action de pilotage autonome du véhicule). Le moyen de gestion des messages reçus est en outre configuré pour rejeter directement un message reçu renouvelant un message antérieurement reçu, authentifié et enregistré ATH_DAT dans la mémoire non-volatile matériellement sécurisée sNVM, et dont la durée de vie ΔT n'est pas épuisée.

Il est en effet possible d'identifier un message sans mettre en oeuvre le traitement d'authentification par le circuit d'authentification. Ainsi, la procédure de rejet d'un message reçu est très rapide et permet de ne pas engorger le système en cas de grand nombre de messages reçus. Un rejet direct d'un message reçu correspond simplement à ne pas traiter ni enregistrer le message par exemple.

L'épuisement de la durée de vie peut être évalué par comparaison entre la donnée d'horodatage TS attribuée à ce message, et une valeur courante de la « date » (par exemple avec une granularité de l'ordre de la microseconde) au moment de la réception du renouvellement.

En effet, le compteur d'horloge toujours actif RTC est configuré pour générer une valeur courante de base de temps de référence, pouvant être utilisée pour évaluer l'épuisement ou non de la durée de vie des messages ATH_MSS.

Le compteur d'horloge toujours actif RTC est avantageusement configuré pour générer la valeur courante de la base de temps de référence à la fois dans un mode de fonctionnement en veille, c'est-à-dire par exemple un mode de fonctionnement dégradé à basse consommation énergétique, et dans un mode de fonctionnement actif de l'élément sécurisé eSE.

Cela permet avantageusement que la donnée d'horodatage TS soit très fiable, étant donné qu'elle bénéfice des moyens de sécurité de l'élément sécurisé eSE, et ce même dans un fonctionnement dégradé en mode veille, contrairement à des générateurs d'horloge externes pouvant être compromis par une action faite sur le dispositif externe.

La figure 3 illustre un procédé 300 correspondant à la gestion des communications du système de transport intelligent ITS, mise en oeuvre par l'unité de commande électronique ECU décrite en relation avec la figure 2.

Ainsi, le procédé 300 commence avec une réception 301 d'un message INC_MSS.

Une étape 302 vérifie si le message INC_MSS est déjà authentifié et enregistrée dans la mémoire sécurisée sNVM. Avantageusement, l'étape 302 vérifie cumulativement que la durée de vie ΔT attribuée au message antérieurement reçu, authentifié et enregistré dans la mémoire sécurisée sNVM n'est pas épuisée. La vérification de la durée de vie peut comparer le temps t écoulé, dans la base de temps de référence RTC, entre la donnée d'horodatage attribuée au message antérieur et l'instant de réception 301 « t<ΔT ».

Dans l'affirmative « ok », le procédé passe à une étape 303 de rejet direct RJCT du message reçu INC_MSS.

Dans la négative « nok », une étape 304 d'authentification ATH du message reçu est mise en oeuvre, telle que décrit précédemment en relation avec le circuit d'authentification HSM.

Si le message est authentifié, une étape 305 attribue au message une donnée d'horodatage TS issue du compteur d'horloge toujours actif de l'élément sécurisé eSE. La donnée d'horodatage correspond à l'instant de réception du message INC_MSS dans la base de temps de référence RTC. Avantageusement, l'étape 305 attribue en outre une durée de vie ΔT au message, la durée de vie ΔT commençant à courir, dans la base de temps de référence RTC, à partir de l'instant de la donnée d'horodatage TS.

Enfin, le procédé comprend une étape 306 d'enregistrement du message reçu authentifié et de la donnée d'horodatage respective dans la mémoire non-volatile matériellement sécurisée sNVM appartenant à l'élément sécurisé eSE.

En conséquence, durant toute la durée de vie ΔT du message INC_MSS ainsi enregistré, les messages identiques de renouvellement de ce message seront directement rejetés, c'est-à-dire pas traités par le circuit d'authentification HSM ni enregistrés dans la mémoire sNVM. Cela permet de libérer de la ressource de traitement pour la gestion d'autres messages reçu INC_MSS utiles.

Par ailleurs, l'invention n'est pas limitée à ces modes de réalisation et de mise en oeuvre mais en embrasse toutes les variantes, par exemple :
1- En référence à la figure 4, il est proposé selon un aspect de combiner la technique décrite précédemment en relation avec les figures 1 à 3 (les éléments communs supportent les mêmes références et ne sont pas tous détaillés à nouveau ici) avec une technique du type de celle décrite dans la demande de brevet français ayant pour titre « Unité de commande électronique adaptée à des communications de système de transport intelligent et procédé correspondant » déposée le même jour et par le même demandeur que la présente demande. En détails, dans cette technique un message reçu INC_MSS est directement rejeté, sans procéder à ladite authentification par le circuit d'authentification HSM, s'il provient d'un émetteur d'une première liste « noire » BL d'émetteurs exclus d'office contenue dans l'élément sécurisée eSE ; ou un message reçu INC_MSS est directement enregistré dans la mémoire non-volatile matériellement sécurisée sNVM, sans ladite authentification HSM, s'il provient d'un émetteur d'une deuxième liste « blanche » WL d'émetteurs admis d'office contenue dans l'élément sécurisée eSE.
   L'élément sécurisé eSE est avantageusement configuré pour attribuer une donnée d'horodatage TS issue dudit compteur d'horloge RTC, aux messages reçus provenant d'un émetteur de la liste blanche WL, ou aux messages reçus et authentifiés (c'est-à-dire les messages reçus provenant d'un émetteur absent de la liste noire BL et absent de la liste blanche WL) et pour enregistrer lesdits messages ATH_DAT et les données d'horodatages respectives TS dans la mémoire non-volatile matériellement sécurisée sNVM.
   Ainsi, le rejet direct (identifié dans la liste noire BL) d'un message reçu, c'est à dire que le message n'est ni traité ni enregistré, est très rapide et permet de ne pas engorger le système en cas de grand nombre de messages reçus. De même, l'enregistrement direct (identifié dans la liste blanche WL) d'un message reçu est très rapide et permet de ne pas engorger le système en cas de grand nombre de messages reçus, y compris des messages de renouvellement à une fréquence élevée.
2- Selon un autre aspect, il est également proposé un véhicule terrestre à moteur incorporant une unité de commande électronique ECU telle que décrite précédemment en relation avec les figures 1 à 4.
3- Selon un autre aspect, il est également proposé un dispositif d'infrastructure de chaussée incorporant une unité de commande électronique ECU telle que décrite précédemment en relation avec les figures 1 à 4.

## Revendications

1. Unité de commande électronique (ECU) comprenant un circuit de communication (MDM) adapté pour recevoir des messages (INC_MSS) du type système de transport intelligent (ITS), un circuit d'authentification (HSM) adapté pour authentifier les messages reçus, et un élément sécurisé (eSE) comportant une mémoire non-volatile matériellement sécurisée (sNVM) et un compteur d'horloge toujours actif (RTC), l'élément sécurisé (eSE) étant configuré pour attribuer aux messages reçus et authentifiés une donnée d'horodatage (TS) issue dudit compteur d'horloge, et pour enregistrer lesdits messages reçus authentifiés (ATH_DAT) et les données d'horodatages respectives dans la mémoire non-volatile matériellement sécurisée (sNVM).

2. Unité de commande électronique selon la revendication 1, dans laquelle le compteur d'horloge toujours actif (RTC) est configuré pour générer une valeur courante de base de temps de référence, dans un mode de fonctionnement en veille et dans un mode de fonctionnement actif de l'élément sécurisé (eSE).

3. Unité de commande électronique selon l'une des revendications 1 ou 2, comportant un moyen de gestion des messages reçus (MDM) configuré pour attribuer une durée de vie (ΔT) aux messages enregistrés dans la mémoire non-volatile matériellement sécurisée (sNVM), et pour rejeter directement un message reçu renouvelant un message antérieurement reçu, authentifié et enregistré (ATH_DAT) dans la mémoire non-volatile matériellement sécurisée (sNVM) et dont la durée de vie (ΔT) n'est pas épuisée.

4. Unité de commande électronique selon l'une des revendications précédentes, dans laquelle le circuit de communication (MDM) est adapté à des communications sans fil selon le protocole de la norme IEEE 802. 11p, ou selon le protocole 5G.

5. Unité de commande électronique selon l'une des revendications précédentes, dans laquelle l'élément sécurisé (eSE) comporte en outre une première liste (BL) d'émetteurs exclus d'office et l'unité de commande électronique (ECU) est configurée pour rejeter directement un message reçu (INC_MSS) provenant d'un émetteur de la première liste (BL), sans procéder à l'authentification de ce message par le circuit d'authentification (HSM) ; ou l'élément sécurisé (eSE) comporte en outre une deuxième liste (WL) d'émetteurs admis d'office et l'unité de commande électronique (ECU) est configurée pour enregistrer directement un message reçu (INC_MSS) provenant d'un émetteur de la deuxième liste (WL), dans la mémoire non-volatile matériellement sécurisée (sNVM) ou dans une mémoire non-volatile non-sécurisée (NVM), sans procéder à l'authentification de ce message par le circuit d'authentification (HSM).

6. Procédé de gestion de communications (300) du type système de transport intelligent (ITS) comprenant une réception (301) d'un message (INC_MSS), une authentification (304) du message reçu, une attribution (305) aux messages reçus et authentifiés d'une donnée d'horodatage (TS) issue un compteur d'horloge toujours actif appartenant à un élément sécurisé (eSE) d'une unité de commande électronique (ECU), et un enregistrement (306) desdits messages reçus authentifiés et des données d'horodatages respectives dans une mémoire non-volatile matériellement sécurisée (sNVM) appartenant à l'élément sécurisé (eSE).

7. Procédé selon la revendication 6, dans lequel une valeur courante de base de temps de référence est générée par le compteur d'horloge toujours actif (RTC), dans un mode de fonctionnement en veille et dans un mode de fonctionnement actif de l'unité de commande électronique (ECU).

8. Procédé selon l'une des revendications 6 ou 7, comprenant une attribution (305) d'une durée de vie (ΔT) aux messages enregistrés dans la mémoire non-volatile matériellement sécurisée (sNVM), et un rejet direct (303) d'un message reçu renouvelant un message antérieurement reçu, authentifié et enregistré dans la mémoire non-volatile matériellement sécurisée (sNVM) et dont la durée de vie n'est pas épuisée (t<ΔT).

9. Procédé selon l'une des revendications 6 à 8, dans lequel les communications (301) sont des communications sans fil selon le protocole de la norme IEEE 802.11p ou selon le protocole 5G.

10. Procédé selon l'une des revendications 6 à 9, dans lequel un message reçu est directement rejeté, sans avoir procédé à ladite authentification (304) de ce message, s'il provient d'un émetteur d'une première liste (BL) d'émetteurs exclus d'office contenue dans l'élément sécurisée (eSE) ; ou un message reçu est directement enregistré dans la mémoire non-volatile matériellement sécurisée (sNVM) ou dans une mémoire non-volatile non-sécurisée (NVM), sans avoir procédé à ladite authentification (304) de ce message, s'il provient d'un émetteur d'une deuxième liste (WL) d'émetteurs admis d'office contenue dans l'élément sécurisée (eSE).
